(19) Europäisches Patentamt

European Patent Office

Office européen des brevets

(11) EP 0 820 040 B1

(12) EUROPEAN PATENT SPECIFICATION

(45) Date of publication and mention
of the grant of the patent:
**18.08.2004 Bulletin 2004/34**

(51) Int Cl.$^7$: **G01S 11/12**, G06T 7/00

(21) Application number: **97305333.3**

(22) Date of filing: **17.07.1997**

(54) **Passive range estimation using image size measurements**

Passive Entfernungsabschätzung unter Verwendung von Bildgrösseabmessungen

Estimation passive de distance utilisant des mesures de taille

(84) Designated Contracting States:
**DE FR GB IT NL**

(30) Priority: **17.07.1996 US 21913 P**

(43) Date of publication of application:
**21.01.1998 Bulletin 1998/04**

(73) Proprietor: **Raytheon Company**
**Waltham, Massachusetts 02451-1449 (US)**

(72) Inventor: **van Rheeden, David R.**
**The Colony, Texas 75056 (US)**

(74) Representative: **Jackson, David Spence et al**
**REDDIE & GROSE**
**16, Theobalds Road**
**London, WC1X 8PL (GB)**

(56) References cited:
**US-A- 5 249 128**     **US-A- 5 282 013**
**US-A- 5 479 360**

**Description**

This invention relates to passive estimation of range from a sensor or seeker to an object and, more specifically, to a system and method for estimating such range based upon the change of size of the object with change of distance of the object of interest within a scene from the sensor.

There are a number of situations wherein it is desirable to estimate the range to an object of interest or target. For example, if for some reason the ILS of an aircraft becomes disabled, it is highly advantageous to know the distance from the entrance to the runway to the aircraft to assist in landing. In the case of automotive travel, it would be highly desirable to always be aware of the distance between vehicles to avoid collisions. An air-to-air missile can use estimated range to the target to determine when to detonate its warhead. Anti-tank missiles which fly non-line-of-sight trajectories use range to determine target position on the battlefield.

Active techniques to measure range, such as radar, ladar and sonar, have been used extensively. The drawback of active ranging approaches, primarily in military applications, is that they can be easily detected by the target under attack. For example, if a submarine commander uses sonar to determine the position and velocity of an enemy ship, he runs a high risk of being detected. In such situations, it is advantageous to estimate range to the target passively.

The most common technique used to passively estimate range to a target employs a Kalman filter to estimate range from angle-only measurements. Initially, a rectangular Cartesian coordinate-based extended Kalman filter (EKF) is used to estimate target positions and velocities in Cartesian coordinates from angle measurements. Analytical and experimental work has shown that the Cartesian-based EKF suffers from instabilities and bias in the filter as discussed in "Fundamental Properties and Performance of Bearings-Only Target Motion Analysis", by S.C. Nardone et al., IEEE Transactions on Auto. Control, Vol. AC-29, No. 4, Sept. 1984, pp. 775-781. A paper entitled "An Angle-Only Tracking Filter in Modified Spherical Coordinates", by D. V. Stallard, AIAA Guidance, Navigation, & Control Conference, Vol. 1, August 17-19, 1987, pp. 542-550 describes the use of modified spherical coordinates (MSC) which reduces problems with EKF observability, range bias and covariance ill-conditioning. In this paper, line-of-sight (LOS) angles of a missile are used as both filter measurements and states. This paper proposed the following six-state vector:

$$\underline{x} = [\Theta\, \dot{\Theta}\ \psi\ \omega\ 1/r\ \dot{r}/r]^T$$

where $\Theta$ is the pitch LOS angle, $\dot{\Theta} = d\Theta/dt$, $\Psi$ is the yaw LOS angle, $\omega = (d\psi/dt)\cos\Theta$, r is range to the target along the LOS and $\dot{r}$ is the range-rate to the target along the LOS. An important point that is noted is that the l/r state can be determined only if the missile accelerates in a direction perpendicular to the LOS because, as can be demonstrated mathematically, when l/r becomes observable, range can be passively estimated.

Considering a command to LOS flight from a gunner to a target, the missile flies as closely as possible to the LOS of the gunner. Missile accelerations perpendicular to the LOS due to climbing, diving or yaw maneuvers are undesirable since such maneuvers may cause the missile to hit the ground or miss the target completely. However, since the angle-only measurement EKF approaches require maneuvers away from the LOS, these techniques cannot be used for LOS-only engagements.

US 5,249,128 discloses a system and method for range detection using a passive infrared sensing device.

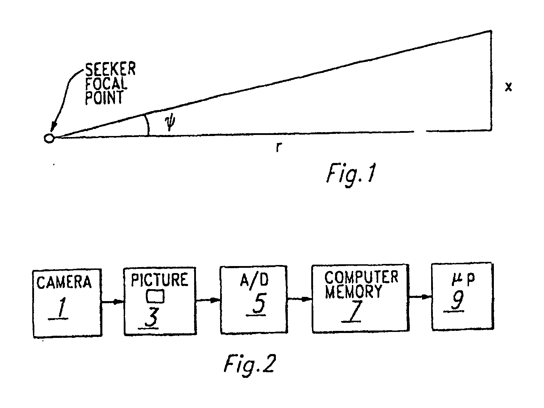

The invention is defined in the claims, to which reference is now directed. In accordance with a preferred embodiment of the present invention, it has been determined that a sensor, such as a camera, IR detector, missile containing an imaging seeker or the like, using the size of the object or target and the size change of the object or target as seen within the sensed scene or picture over time as a guide as the distance between sensor and object changes, will provide an estimated range to the target. FIGURE 1 shows the geometry to be used to derive a filter which will passively estimate range from target size and the change in target size with distance in the sensed scene to the target. If x is a physical dimension of the target (e.g., width or height), r is the range along the LOS from the sensor to the target and $\Psi$ is the angle subtended by x in the sensor image, then $\tan \Psi = x/r$ and $d(\tan \Psi)/dt = (\dot{x}r - x\dot{r})/r^2 = \dot{x}/r - (\tan \Psi)(\dot{r}/r)$ and $d(1/r)/dt = -(1/r)^2\dot{r}$. If the target is not changing aspect with respect to the missile, then $\dot{x} = 0$ and $d(\tan \Psi)/dt = -(\tan \psi)\dot{r}(1/r)$.

Briefly, the abovemay be accomplished by providing a data base containing data capable of determining the particular type of target of interest being sensed within the scene being observed by the sensor. This data base also is provided with data for each type of target therein relating to target dimensions as a function of distance from the target. While the range estimator travels in a direction relative to the target the sensor continually observes the target and the system calculates the dimensions of the target and provides a range estimate therefrom. It follows that the system is fully passive and provides an entirely different approach to range estimation as compared with the prior art.

## BRIEF DESCRIPTION OF THE DRAWINGS

FIGURE 1 shows the geometry to be used to derive a filter which will passively estimate range from target size and the change in target size with distance to the target; and

FIGURE 2 is a block diagram of a passive range estimation system in accordance with the present invention.

## DESCRIPTION OF THE PREFERRED EMBODIMENT

Referring to FIGURE 2, there is shown a seeker in the form of a sensor depicted as a TV camera 1 which is moved relative to a target, such as by being placed on a movable vehicle such as, for example, an automobile for use in a collision avoidance system. The sensor creates a picture 3 of a scene being observed. The picture is provided in digital form, either directly or by conversion from analog to digital form with a converter 5. This provides an array of numbers representing the observed intensity at each of the pixels of the picture observed. The intensity can be, for example, the amount of light received or the amount of heat sensed in the case of an IR detector. These numbers are stored in a memory 7. A microprocessor 9 then reads these numbers in memory 7 and attempts to determine the size of the target of interest within the observed picture therefrom, this being a standard technique as discussed in W.K. Pratt, Digital Image Processing, John Wiley & Sons, 1978, pp. 471-550. This provides an instantaneous horizontal target dimension and an instantaneous vertical target dimension. This procedure and computation is continually repeated, such as, for example, thirty frames/second, while the distance between the target and the sensor simultaneously changes with the sensor generally traveling toward the target, though the invention herein merely requires known relative motion between target and sensor, preferably toward each other. With the sensor approaching the target, the target dimensions within the picture of the scene during each observation of the scene continue to increase with each successive observation. The initial range between the sensor and the target is computed from a data base containing data which recognizes the particular type of target (i.e., type of automobile, type of tank, etc.). Either the target type is known a priori, is recognized by a human operator, or is determined by an automatic target recognition (ATR) system such as described in "Automatic Target Recognition: State of the Art Survey", by B. Bhanu, IEEE Transactions on Aerospace and Electronic Systems, vol. AES-22, no. 4, July 1986, pp. 364-379. Once the target type is recognized, the average dimensions for the target type can be used to compute an initial range estimate.

Referring to FIGURE 1, with x being the average physical height or width of the target type, and with $X_{init}$ being the initial target height or width, respectively, as measured by the microprocessor 9 of FIGURE 2 within the first observed picture, if f is the seeker focal length, then the initial range estimate is computed as $r_{init}=f(x/X_{init})$ ,

The system contains a data base as a part of the microprocessor circuitry which includes data relating to the size and/or other features of each of the types of targets which are expected to be encountered. Such data is provided relating to these targets for various ranges from the target to the sensor as discussed above and a rough estimated initial range to the target is initially provided to the system, though the range estimate need not be very accurate and can be in error by a factor of up to about an order of magnitude.

With the estimated range to the target entered, the microprocessor 9 with data base as discussed above, in conjunction with an extended Kalman filter therein, predicts the range to the target from the prior range estimate and adds the range traveled toward the target by the sensor, the first predicted range calculation using the estimated distance to the target set into the system. The extended Kalman filter estimates the size of the target and, for mathematical reasons, estimates the inverse of the range. The steps involved in making the range and target size predictions are:

a. Estimating the range to the object (target) at sensor frame k-1 which is 1/inverse range estimate at frame k-1.

b. Determining the size of the object in physical dimensions (meters, feet, etc.) at frame k-1 from an estimate of tan Ψ at frame k-1 times the range estimate at frame k-1 in FIGURE 1.

c. Estimating the range to the object at sensor frame k given frame k-1 which is the range estimate at frame k-1 plus the range traveled by the sensor between frames k-1 and k.

d. Estimating the inverse range for frame k, given frame k-1 which is one divided by the range estimate for frame k, knowing frame k-1.

e. Estimating the tanΨ of the object at frame k, knowing the tan Ψ at frame k-1, this tan at frame k being the size of the object in physical dimensions at frame k-1 times the inverse range estimate for frame k, given frame k-1.

The remaining steps of the procedure involve standard extended Kalman filter equations as discussed in Estimation Theory with Applications to Communications and Control, by A.P. Sage and J.L. Melsa, McGraw-Hill, New York, 1971. These include a step of computing a residual and residual covariance wherein the size of the object in the picture is both predicted and measured with an error term being provided, along with the variance therebetween. The filter will then attempt to correct for the measured error by altering the estimate in a direction so as to correct the error. The intent is to drive the average error to zero to indicate that the system is predicting the size of the object correctly. When the size estimate is correct, this means that the range estimate is also correct at the same time. A step of adjusting the gain of the extended Kalman filter determines the weight to be given to the residual term to make the required corrections. This determines the speed at which the corrections are to be made, taking into account problems such as sensor noise. A step of state update and covariance takes the error term, multiplies it by some gains and adds the resulting corrections to the prior estimates of range and object size.

Assuming the extended Kalman filter state vector at sensor frame k-1, $x_{k-1}$, contains a first element $(\tan \Psi)_{k-1}$ and a second element $(1/r)_{k-1}$, the extended Kalman filter equations setting forth the above are as follows:

1. State predictions:

$$\hat{r}_{k-1} = 1 / \left(\frac{1}{r}\right)_{k-1}$$

$$\hat{x}_{k-1} = (\tan \psi)_{k-1} \hat{r}_{k-1}$$

$$\left(\frac{1}{r}\right)_{k|k-1} = \frac{1}{\hat{r}_{k-1} + \dot{r}_{k-1} \Delta T}$$

$$(\tan \psi)_{k|k-1} = \hat{x}_{k-1} \left(\frac{1}{r}\right)_{k|k-1}$$

$$\bar{x}_{k|k-1} = \left[(\tan \psi)_{k|k-1} \quad \left(\frac{1}{r}\right)_{k|k-1}\right]^{T}$$

2. State covariance predictions:

$$\Phi_{k,k-1} = \begin{bmatrix} 1 - \dot{r}_{k-1}\left(\frac{1}{r}\right)_{k-1} \Delta T & -\dot{r}_{k-1}(\tan \psi)_{k-1} \Delta T \\ 0 & 1 - 2\dot{r}_{k-1}\left(\frac{1}{r}\right)_{k-1} \Delta T \end{bmatrix}$$

$$Q = \begin{bmatrix} q_{\tan \psi} & 0 \\ 0 & q_{1/r} \end{bmatrix}$$

$$P_{k|k-1} = \Phi_{k,k-1} P_{k-1} \Phi_{k,k-1}^{T} + Q$$

3. Residual and residual covariance:

$$v_{k} = (\tan \psi)_{k,measured} - (\tan \psi)_{k|k-1}$$

$$H = [1 \ 0]$$

$$S_{k} = HP_{k|k-1} H^{T} + \sigma_{\tan \psi}^{2}$$

4. Kalman gain:

$$K_k = P_{k|k-1} H^T S_k^{-1}$$

5. State update and covariance:

$$\overset{\rightharpoonup}{\hat{x}}_k = \overset{\rightharpoonup}{\hat{x}}_{k|k-1} + K_r v_k$$

$$P_k = P_{k|k-1} + KHP_{k|k-1}$$

The terms $q_{\tan\psi}$ and $q_{\psi}$, are the plant noise variances for the $\tan\psi$ and $\frac{1}{r}$ states, respectively. The variance $\sigma_{\tan\psi}^2$ is the measurement uncertainty of $\tan\psi$. The term $\dot{r}_{k-1}$ is the known relative closure rate between the sensor and the target at sensor frame $k$-1. The term $\Delta T$ represents the time elapsed between sensor frames $k$-1 and $k$.

The initial state vector can be computed as $\underline{x}_o = [\tan(\Psi_o) \ (1/r_{init})]^T$ where $\Psi_o$ is the initial target size measurement and $r_{init}$ is the initial range estimate. The initial range estimate is computed from expected target dimensions and the initial target size as measured in the image. The initial state covariance matrix, $P_o$, is specified as:

$$P_0 = \begin{bmatrix} \sigma_{\tan\psi}^2 & 0 \\ 0 & \sigma_{r\_init}^2 \left( \dfrac{1}{\hat{r}_{init}} \right)^4 \end{bmatrix}$$

The (2,2) element of the matrix $P_o$ is computed using

$$Var\left[\frac{1}{r}\right] \approx \frac{Var[r]}{\mu_r^4}$$

(see Introduction to the Theory of Statistics, by A.M. Mood, F.A. Graybill, and D.C. Boes, 3rd Ed., 1974, p. 181, equation 15).

The extended Kalman filter defined herein is similar to the modified polar coordinate (MPC) filter described by Stallard in a previously cited reference. However, instead of relying upon LOS angles and LOS angle rates, this new filter uses target size.

Though the invention has been described with respect to a specific preferred embodiment thereof, many variations and modifications will immediately become apparent to those skilled in the art.

**Claims**

1.  A range estimation method, comprising the steps of:

    observing (1, 3, 5) a scene containing an object at a plurality of successive points in time while moving relative the scene;
    determining (7, 9) size information regarding the object from each observation of the scene; and
    estimating (7, 9) a range to the object;

    **characterized in that**:

said estimating step (7, 9) is carried out by effecting estimation, in response to each observation of the scene, of the range to the object as a function of the prior estimate of the range and as a function of the size information from the most recent observation of the scene.

2. A method according to Claim 1, wherein said estimating step includes the steps of:

generating (7, 9) a predicted range by adjusting the prior estimate of the range as a function of the velocity of movement relative to the scene and the elapsed time between the most recent observation and the immediately preceding observation;

estimating (7, 9) a size of the object as a function of the predicted range;

comparing (7, 9) the estimated size to the size information from the most recent observation of the scene in order to determine a size error;

effecting (7, 9) an adjustment to the estimated size which reduces the size error, while effecting a proportional adjustment to an inverse of the predicted range; and

generating (7, 9) the estimate of the range by inverting the adjusted inverse of the predicted range.

3. A method according to Claim 1, wherein said estimating step includes the step of filtering (7, 9) the size information obtained during successive observations of the scene.

4. A method according to Claim 3, wherein said filtering step (7, 9) is carried out using extended Kalman-type filtering techniques.

5. A method according to Claim 1, including the steps of:

providing (7, 9) a database containing data for identifying predetermined objects, and containing data for estimating an initial range to each predetermined object as a function of an observed dimension therefor;

identifying (7, 9) the object in the scene by comparatively evaluating data from a first of the observations of the scene with data from the database; and

using the initial range information in the database to generate (7, 9) an initial estimate of the range to the object in the scene.

6. A method according to Claim 1, wherein said observing step (1, 3, 5) is carried out at least three times at respective different points in time.

7. A method according to Claim 1 and including the step of providing (7, 9) a database containing data for identification of certain targets and data for estimating an initial range to each of said certain targets as a function of observed dimensions of said targets; wherein the said observing step comprises observing (1, 3, 5) a scene containing a target a plurality of spaced apart times while moving relative to said target; the said step of determining size information comprises obtaining (7, 9) data from each observation of said scene relating to a dimension of said target; and the said estimating step comprises identifying (7, 9) said target from said database, and using (7, 9) the corresponding initial range from said database to initially estimate a remaining range to said target; and thereafter repeatedly estimating (7, 9) the remaining range to said target from said data obtained by a respective said observation and from a prior estimation of the remaining range to said target

8. A range estimation system, comprising:

means (1, 3, 5) for observing a scene containing an object at a plurality of successive points in time while said means for observing is moving relative to the scene;

means (7, 9) for determining size information regarding the object from each observation of the scene by said means for observing; and

means (7, 9) for estimating a range to the object;

**characterized in that**:

said means (7, 9) for estimating effects estimation, in response to each observation of the scene, of the range to the object as a function of a prior estimate of the range and as a function of the size information from the most recent observation of the scene.

**9.** A system according to Claim 8, wherein said means for estimating includes:

means (7, 9) for generating a predicted range by adjusting the prior estimate of the range as a function of the velocity of movement relative to the scene and the elapsed time between the most recent observation and the immediately preceding observation;
means (7, 9) for estimating a size of the object as a function of the predicted range;
means (7, 9) for comparing the estimated size to the size information from the most recent observation of the scene in order to determine a size error;
means (7, 9) for effecting an adjustment to the estimated size which reduces the size error, while effecting a proportional adjustment to an inverse of the predicted range; and
means (7, 9) for generating the estimate of the range by inverting the adjusted inverse of the predicted range.

**10.** A system according to Claim 8, wherein said means for estimating includes filtering means (7, 9) for filtering the size information obtained during successive observations of the scene.

**11.** A system according to Claim 10, wherein said filtering means (7, 9) uses an extended Kalman-type filter.

**12.** A system according to Claim 8, including:

a database (7, 9) containing data for identifying predetermined objects, and containing data for estimating an initial range to each predetermined object as a function of an observed dimension therefor;
means (7, 9) for identifying the object in the scene by comparatively evaluating data from a first of the observations of the scene with data from the database; and
means (7, 9) for using the initial range information in the database to generate an initial estimate of the range to the object in the scene.

**13.** A system according to Claim 8, wherein said means (1, 3, 5) for observing is operative to observe the scene at least three times art respective different points in time.

**Patentansprüche**

**1.** Verfahren zur Entfernungsabschätzung mit folgenden Schritten:

Beobachten (1, 3,5) einer Szenerie, welche ein Objekt enthält, zu einer Mehrzahl von aufeinanderfolgenden Zeitpunkten während einer Bewegung relativ zu der Szenerie;

Bestimmen (7, 9) von Größeninformationen bezüglich des Objektes aus jeder Beobachtung der Szenerie; und

Abschätzen (7, 9) einer Entfernung zu dem Objekt hin;

**dadurch gekennzeichnet, daß** der genannte Abschätzungsschritt (7, 9) in der Weise ausgeführt wird, daß in Abhängigkeit von jeder Beobachtung der Szenerie die Abschätzung der Entfernung zum Objekt hin als eine Funktion der vorausgehenden Entfernungsabschätzung und als eine Funktion der Größeninformation aus der jüngsten Beobachtung der Szenerie durchgeführt wird.

**2.** Verfahren nach Anspruch 1, bei welchem der genannte Abschätzungsschritt folgende Schritte enthält:

Erzeugen (7, 9) einer Entfemungsvorhersage durch Einstellung der vorausgehenden Abschätzung der Entfernung als Funktion der Bewegungsgeschwindigkeit relativ zu der Szenerie und der abgelaufenen Zeit zwischen der jüngsten Beobachtung und der unmittelbar vorausgehenden Beobachtung;

Abschätzen (7, 9) einer Größe des Objektes als Funktion der Entfernungsvoraussage;

Vergleichen (7, 9) der abgeschätzten Größe mit der Größeninformation aus der jüngsten Beobachtung der Szenerie, um einen Größenfehler zu bestimmen;

Bewirken (7, 9) einer Einstellung an der abgeschätzten Größe, welche den Grössenfehler vermindert, während eine proportionale Einstellung an dem Inversen der vorhergesagten Entfernung vorgenommen wird; und

Erzeugen (7, 9) der Abschätzung der Entfernung durch Invertieren des justierten inversen Wertes der vorhergesagten Entfernung.

3. Verfahren nach Anspruch 1, bei welchem der genannte Schritt der Abschätzung den Schritt des Filtems (7, 9) der Größeninformation enthält, welche während aufeinanderfolgender Beobachtungen der Szenerie gewonnen wird.

4. Verfahren nach Anspruch 3, bei welchem der genannte Filterungsschritt (7, 9) unter Verwendung erweiterter Kalman-Filtertechniken ausgeführt wird.

5. Verfahren nach Anspruch 1, welches folgende Schritte enthält:

Bereitstellen (7, 9) einer Datenbank, welche Daten zur Identifizierung vorbestimmter Objekte und Daten zur Abschätzung einer Anfangsentfemung zu jedem vorbestimmten Objekt als Funktion einer beobachteten Abmessung davon enthält;

Identifizieren (7, 9) des Objektes in der Szenerie durch vergleichende Abschätzung der Daten von einer ersten der Beobachtungen der Szenerie mit Daten aus der Datenbank; und

Verwenden der anfänglichen Entfernungsinfonnation in der Datenbasis zur Erzeugung (7, 9) einer anfänglichen Abschätzung der Entfernung zum Objekt in der Szenerie.

6. Verfahren nach Anspruch 1, wobei der genannte Schritt des Beobachtens (1, 3, 5) mindestens dreimal zu unterschiedlichen Zeitpunkten ausgeführt wird.

7. Verfahren nach Anspruch 1, welches den Schritt der Bereitstellung (7, 9) einer Datenbank enthält, welche Daten für die Identifizierung bestimmter Zielobjekte und Daten für die Abschätzung einer Anfangsentfernung zu jedem der genannten bestimmten Zielobjekte hin als Funktion von beobachteten Abmessungen der Zielobjekte enthält; wobei der genannte Beobachtungsschritt das Beobachten (1, 3, 5) einer Szenerie, welche ein Zielobjekt enthält, zu einer Mehrzahl beabstandeter Zeitpunkte während einer Bewegung relativ zu dem Zielobjekt umfaßt; wobei der Schritt der Bestimmung einer Größeninformation das Gewinnen (7, 9) von Daten aus jeder Beobachtung der Szenerie bezüglich einer Abmessung des genannten Zielobjektes enthält; und wobei der Schritt des Abschätzens das Identifizieren (7, 9) des Zielobjektes aus der Datenbank und die Verwendung (7, 9) der entsprechenden Anfangsentfernung aus der Datenbank umfaßt, um eine anfängliche Abschätzung einer verbleibenden Entfernung zu dem Zielobjekt vorzunehmen; und wonach dann wiederholt die verbleibende Entfernung zum Zielobjekt aus den genannten Daten abgeschätzt (7, 9) wird, die durch eine jeweilige Beobachtung und aus der vorausgehenden Abschätzung der verbleibenden Entfernung zum Zielobjekt gewonnen wird.

8. System zur Entfemungsabschätzung, welches folgendes enthält:

Mittel (1, 3, 5) zur Beobachtung einer Szenerie, welche ein Objekt enthält, zu einer Mehrzahl aufeinanderfolgender Zeitpunkte, während sich die Mittel zur Beobachtung relativ zu der Szenerie bewegen;

Mittel (7, 9) zur Bestimmung einer Größeninformation bezüglich des Objektes aus jeder Beobachtung der Szenerie durch die genannten Beobachtungsmittel; und

Mittel (7, 9) zur Abschätzung einer Entfernung zu dem Objekt hin;

**dadurch gekennzeichnet; daß** die genannten Mittel (7, 9) zur Abschätzung diese Abschätzung der Entfernung zu dem Objekt hin in Abhängigkeit von jeder Beobachtung der Szenerie als eine Funktion einer vorhergehenden Abschätzung der Entfernung und als eine Funktion der Größeninformation aus der jüngsten Beobachtung der Szenerie vornehmen.

9. System nach Anspruch 8, bei welchem die Mittel zur Abschätzung folgendes enthalten:

Mittel (7, 9) zur Erzeugung einer vorhergesagten Entfernung durch Einstellung der vorausgehenden Abschätzung der Entfernung als eine Funktion der Bewegungsgeschwindigkeit zur Szenerie hin und der verstrichenen Zeit zwischen der jüngsten Beobachtung und der unmittelbar vorausgehenden Beobachtung;

Mittel (7, 9) zur Abschätzung einer Größe des Objektes als Funktion von der vorhergesagten Entfernung;

Mittel (7, 9) zum Vergleichen der abgeschätzten Größe mit der Größeninformation aus der jüngsten Beobachtung der Szenerie, um einen Größenfehler festzustellen;

Mittel (7, 9) zur Vornahme einer Einstellung an der abgeschätzten Größe, wobei die Einstellung den Größenfehler vermindert, während eine proportionale Einstellung an dem Inversen der vorhergesagten Entfernung vorgenommen wird; und

Mittel (7, 9) zur Erzeugung einer Abschätzung der Entfernung durch Invertieren des eingestellten inversen Wertes der vorhergesagten Entfernung.

**10.** System nach Anspruch 8, bei welchem die genannten Mittel zur Abschätzung Filtermittel (7, 9) zur Filterung der Größeninformation enthalten, die während aufeinanderfolgender Beobachtungen der Szenerie gewonnen wurde.

**11.** System nach Anspruch 10, bei welchem die genannten Filtermittel (7, 9) eine erweiterte Kalman-Filterungstechnik verwenden.

**12.** System nach Anspruch 8, welches folgendes enthält:

eine Datenbank (7, 9), welche Daten zur Identifizierung vorbestimmter Objekte sowie Daten zur Abschätzung einer anfänglichen Entfernung zu jedem vorbestimmten Objekt hin als eine Funktion einer beobachteten Dimension davon enthält;

Mittel (7, 9) zur Identifizierung des Objektes in der Szenerie durch vergleichende Bewertung der Daten von einer ersten der Beobachtungen der Szenerie mit den Daten von der Datenbank; und

Mittel (7, 9) zur Verwendung der anfänglichen Entfernungsinformation in der Datenbank zur Erzeugung einer anfänglichen Abschätzung der Entfernung zum Objekt in der Szenerie.

**13.** System nach Anspruch 8, bei welchem die Mittel (1, 3, 5) zur Beobachtung in der Weise wirksam sind, daß sie die Szenerie mindestens dreimal zu jeweils unterschiedlichen Zeitpunkten beobachten.

**Revendications**

**1.** Procédé d'estimation de distance, comprenant les étapes :

d'observation (1, 3, 5) d'une scène contenant un objet en une pluralité de points successifs dans le temps simultanément à un déplacement par rapport à la scène ;
de détermination (7, 9) d'informations de taille concernant l'objet à partir de chaque observation de la scène ; et
d'estimation (7, 9) d'une distance jusqu'à l'objet ;

**caractérisé en ce que** :

ladite étape d'estimation (7, 9) est exécutée par l'exécution d'une estimation, en réponse à chaque observation de la scène, de la distance jusqu'à l'objet en fonction de l'estimation antérieure de la distance et en fonction des informations de taille obtenues à la plus récente observation de la scène.

**2.** Procédé selon la revendication 1, dans lequel ladite étape d'estimation comporte les étapes :

de génération (7, 9) d'une distance prédite en réglant l'estimation antérieure de la distance en fonction de la vitesse du mouvement par rapport à la scène et du temps écoulé entre la plus récente observation et l'observation immédiatement précédente ;
d'estimation (7, 9) d'une taille de l'objet en fonction de la distance prédite ;

de comparaison (7, 9) de la taille estimée aux informations de taille obtenues à la plus récente observation de la scène afin de déterminer une erreur de taille ;

d'exécution (7, 9) d'un réglage sur la taille estimée qui réduit l'erreur de taille, tout en effectuant un réglage proportionnel sur l'inverse de la distance prédite ; et

de génération (7, 9) de l'estimation de la distance en inversant l'inverse réglé de la distance prédite.

3. Procédé selon la revendication 1, dans lequel ladite étape d'estimation comporte l'étape de filtrage (7, 9) des informations de taille obtenues durant des observations successives de la scène.

4. Procédé selon la revendication 3, dans lequel ladite étape de filtrage (7, 9) est exécutée en utilisant des techniques de filtrage du type Kalman étendu.

5. Procédé selon la revendication 1, comportant les étapes :

de fourniture (7, 9) d'une base de données contenant des données pour identifier des objets prédéterminés, et contenant des données pour estimer une distance initiale jusqu'à chaque objet prédéterminé en fonction d'une dimension observée de celui-ci ;

d'identification (7, 9) de l'objet dans la scène en évaluant comparativement les données d'une première des observations de la scène à des données de la base de données ; et

d'utilisation des informations de distance initiales dans la base de données afin de générer (7, 9) une estimation initiale de la distance jusqu'à l'objet dans la scène.

6. Procédé selon la revendication 1, dans lequel ladite étape d'observation (1, 3, 5) est exécutée au moins trois fois en différents points respectifs dans le temps.

7. Procédé selon la revendication 1 et comportant l'étape de fourniture (7, 9) d'une base de données contenant des données pour identifier certaines cibles et des données pour estimer une distance initiale jusqu'à chacune desdites certaines cibles en fonction de dimensions observées desdites cibles ; dans lequel ladite étape d'observation comprend l'observation (1, 3, 5) d'une scène contenant une cible une pluralité de fois espacées dans le temps simultanément à un déplacement par rapport à ladite cible ; ladite étape de détermination d'informations de taille comprend l'obtention (7, 9) de données à la suite de chaque observation de ladite scène se rapportant à une dimension de ladite cible ; et ladite étape d'estimation comprend l'identification (7, 9) de ladite cible à partir de ladite base de données, et l'utilisation (7, 9) de la distance initiale correspondante de ladite base de données afin d'estimer initialement une distance restante jusqu'à ladite cible ; et après cela l'estimation répétée (7, 9) de la distance restante jusqu'à ladite cible à partir desdites données obtenues par une dite observation respective et à partir d'une estimation antérieure de la distance restante jusqu'à ladite cible.

8. Système d'estimation de distance, comprenant :

un moyen (1, 3, 5) pour observer une scène contenant un objet en une pluralité de points successifs dans le temps simultanément à un déplacement par rapport à la scène dudit moyen d'observation ;

un moyen (7, 9) pour déterminer des informations de taille concernant l'objet à partir de chaque observation de la scène par ledit moyen d'observation ; et

un moyen (7, 9) pour estimer une distance jusqu'à l'objet ;

**caractérisé en ce que** :

ledit moyen (7, 9) d'estimation exécute une estimation, en réponse à chaque observation de la scène, de la distance jusqu'à l'objet en fonction d'une estimation antérieure de la distance et en fonction des informations de taille obtenues à la plus récente observation de la scène.

9. Système selon la revendication 8, dans lequel ledit moyen d'estimation comporte :

un moyen (7, 9) pour générer une distance prédite en réglant l'estimation antérieure de la distance en fonction de la vitesse du mouvement par rapport à la scène et du temps écoulé entre la plus récente observation et l'observation immédiatement précédente ;

un moyen (7, 9) pour estimer une taille de l'objet en fonction de la distance prédite ;

un moyen (7, 9) pour comparer la taille estimée aux informations de taille obtenues à la plus récente observation de la scène afin de déterminer une erreur de taille ;

un moyen (7, 9) pour effectuer un réglage sur la taille estimée qui réduit l'erreur de taille, tout en effectuant un réglage proportionnel sur l'inverse de la distance prédite ; et

un moyen (7, 9) pour générer l'estimation de la distance en inversant l'inverse réglé de la distance prédite.

10. Système selon la revendication 8, dans lequel ledit moyen d'estimation comporte un moyen de filtrage (7, 9) pour filtrer les informations de taille obtenues durant des observations successives de la scène.

11. Système selon la revendication 10, dans lequel ledit moyen de filtrage (7, 9) utilise un filtre du type Kalman étendu.

12. Système selon la revendication 8, comportant :

une base de données (7, 9) contenant des données pour identifier des objets prédéterminés, et contenant des données pour estimer une distance initiale jusqu'à chaque objet prédéterminé en fonction d'une dimension observée de celui-ci ;

un moyen (7, 9) pour identifier l'objet dans la scène en évaluant comparativement les données d'une première des observations de la scène à des données de la base de données ; et

un moyen pour utiliser les informations de distance initiales dans la base de données afin de générer une estimation initiale de la distance jusqu'à l'objet dans la scène.

13. Système selon la revendication 8, dans lequel ledit moyen (1, 3, 5) d'observation fonctionne pour observer la scène au moins trois fois en différents points respectifs dans le temps.

Fig.1

Fig.2